# EUROPEAN PATENT SPECIFICATION

(11) **EP 2 999 912 B1**
(45) Date of publication and mention of the grant of the patent: **03.07.2019**
(21) Application number: 14724777.9
(22) Date of filing: 20.05.2014
(51) Int. Cl.: F17C 13/04

(54) **PRESSURIZED FLUID CONTAINER WITH A VALVE OPERATED WITH A LEVER**
DRUCKFESTER FLUIDBEHÄLTER MIT EINEM MITTELS EINES HEBELS BETRIEBENEN VENTIL
RÉCIPIENT DE FLUIDE SOUS PRESSION DOTÉ D'UNE SOUPAPE ACTIONNÉE À L'AIDE D'UN LEVIER

(30) Priority: 20.05.2013 GB 201309037
(43) Date of publication of application: 30.03.2016
(73) Proprietor: Linde Aktiengesellschaft, 80331 München (DE)
(72) Inventor: WALES, Duncan, Casto Cambridgeshire PE5 7AX (GB); GIANCARLO, Nicolini, I-25089 Bescia (IT)
(74) Representative: Boult Wade Tennant LLP
(86) International application number: PCT/EP2014/060321
(87) International publication number: WO 2014/187815

(56) References cited:
- WO-A1-03/019056
- BE-A- 589 670
- DE-U- 1 974 391
- US-A- 3 031 165
- US-A- 3 035 605

## Description

The present invention relates to a pressurised fluid container having a shut-off valve.

In particular, the invention relates to a pressurised gas cylinder for use, for example, with medical gasses, welding gasses and the like.

Such cylinders are traditionally provided with a shut off valve at the top of the cylinder which is protected by a guard. The valve has a valve element which is moved towards and away from a seat by rotation of a screw mechanism. This consists of a hand wheel with a male screw which mates with a female screw thread in the valve body. The user can therefore open and close the shut off valve by rotating the hand wheel to raise and lower the valve element.

Although such mechanisms are widely used, they suffer from a number of problems. The hand wheel requires multiple rotations in order to rotate it which is time consuming and it is not particularly accessible when the guard is in place. Further, it can be stuck in a fully open or a fully closed position. Although arrows are usually present on the wheel to indicate the direction of opening and closing to the user, it is difficult to determine by sight the current position of the wheel, such that the user can, for example, attempt to open an already fully open valve and mistakenly believe the valve to be stuck.

A further difficulty with the fact that there is no clear indication of position is that a user may not fully close a valve as there is no clear indication that the valve has reached the fully closed position, thereby leading to inadvertent leakage from the container.

A number of these problems are overcome by using a lever in place of a hand wheel to impart a linear force to a valve via an eccentric coupling.

A lever-based system provides an advantage in that it can be designed to have two distinct positions, namely a fully open position and a fully closed position such that the user is easily able to determine the position of the valve. However, these two discrete positions have a disadvantage as compared to a hand wheel in that, with a hand wheel, the user can simply carry on turning the valve until they experience a high degree of resistive force indicating that the valve is closed. This is not generally possible with a lever as the user has to move the lever to a fixed and predetermined closed position. There will be a reasonable number of components between the eccentric coupling and the valve element seat, such that the lever arrangement should be able to accommodate dimensional tolerances which arise from this. Also, over time, the relative positions of these components is likely to change, particularly the valve element itself which is likely to wear. A lever-based mechanism should be able to accommodate dimensional tolerances and wear if it is going close reliably when the lever reaches a fixed closed position.

US 3,035,605 discloses a pressurised fluid cylinder having a shut-off valve, the shut-off valve comprising a valve element which is movable in a linear direction towards and away from a valve seat to respectively selectively close and open the shut-off valve, a lever which is coupled to the valve element via an eccentric coupling so that rotation of the lever causes linear motion of the valve element. According to the present invention, such a cylinder is characterised by a resilient member acting between the valve element and the eccentric coupling so as to urge these apart.

The presence of the resilient member which acts to urge to bias the valve element and the eccentric coupling apart means that, regardless of the dimensional tolerances that may exist between the eccentric coupling and the valve seat and/or if any of the components are subject to wear, a desired sealing force is always maintained between the eccentric coupling and the valve seat. As a result, moving the lever to the fixed closed position is guaranteed to move the valve element to the correct closed position despite any variation in tolerances and/or wear.

The resilient member may be arranged to provide a constant pre-set biasing force. However, preferably, the cylinder further comprises a resilient member adjustment nut which allows adjustment of the biasing force provided by the resilient member.

Preferably, the eccentric coupling is coupled to the valve element via a valve stem and the resilient member is accommodated within the valve stem.

The eccentric coupling may either be a cam mechanism or a crank mechanism.

The valve element is preferably outside the pressurised container such that it is biased open by the fluid pressure, or it may be inside the pressurised container such that it is biased closed by the fluid pressure. Additionally, a valve element biasing member may be provided to urge the valve element towards or away from the valve seat.

An example of a cylinder in accordance with the present invention will now be described with reference to the accompanying drawings, in which:
Fig. 1 is a cross-section through the top of the cylinder and the shut-off valve; and
Fig. 2 is a cross-section showing the internal arrangement of the shut-off valve in greater detail.

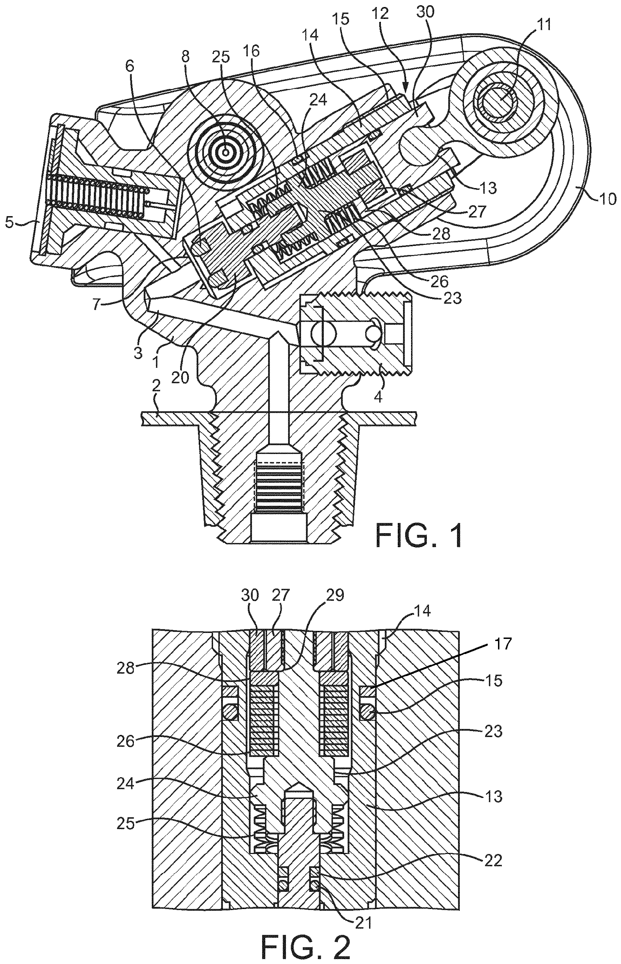

The valve comprises a valve body 1 screwed into a pressurised cylinder 2 as is well known in the art. A gas outlet path 3 extends up through the centre of the lower part of the valve body 1, before having portion inclined to the left and a further portion incline to the right as shown in Fig. 1. These inclined portions are not necessary for the invention which could equally be applied to a straight axial gas flow path, or any arrangement of gas path.

A residual pressure valve 4 and a gauge 5 both communicate with the gas outlet path 3 in the pressurised region upstream of valve element 6. The valve element 6 is a ring which is designed to seat in a valve seat 7 in the form of a shallow annular groove surrounding the outlet of the gas outlet passage 3. As shown in Fig. 1, with the valve element 6 in the open position, communication is opened to a gas outlet 8.

The valve is opened and closed by the operation of a lever 10 which is connected via an eccentric coupling 11 such as a crank or cam whereupon rotation of the lever 10 is connected via the eccentric coupling 11 to linear movement of a valve stem 12 and hence the valve element 6 to open and close the valve as described below. The eccentric coupling 11 is coupled to the valve stem 12 by rotatable coupling 13 which will rotate within the valve stem as the lever is rotated but still transmit an axial force to the valve stem.

The valve stem 12 is slidable within a valve sleeve 14 which is screwed into the valve body 1 via complementary screw threads 15. A high pressure seal 16 seals the interface between the valve body 1 and valve sleeve 14. There is also the option of a back up ring 17 as shown in Fig. 2.

The body of the valve stem 12 is made up of a number of components. Closest to the valve element 6 is a valve element retaining member 20 which retains the valve element 6 and is slidable within the valve sleeve 14 to which it is sealed by high pressure O-ring seal 21. There is also the option of a back-up ring 22 as shown in Fig. 2.

At the end opposite to the valve element 6, the valve element retaining member 20 is screwed into a pre-load shaft 23. This has an outwardly projecting annular flange 24. A first spring 25, which in this case is a helically coiled spring acts between the valve sleeve 14 and the annular flange 24 to urge the pre-load shaft 23 and hence the valve element 6 into an open position.

On the opposite side of the flange 24, the pre-load shaft is surrounded by second spring 26 in the form a stack of Belleville washers or plate springs for the reasons described below.

At the end of the pre-load shaft 23 opposite to the valve element retaining member 20, it is screwed into a preload nut 27 as best shown in Fig. 2. This pre-load nut bears against a washer 28 which sits on top of the second spring 26. The degree to which the pre-load nut 27 is screwed onto the pre-load shaft 23 will determined the biasing force provided by the second spring 26. As can be seen in Fig. 2, a shoulder 29 on the pre-load shaft 23 limits the extent to which the second spring 26 can be compressed.

A slider 30 is attached to the rotatable coupling 13 described above. This is slidable within the valve sleeve 14 and bears on the top surface of the washer 28 as best shown in Fig. 2. It is not positively coupled to the pre-load shaft 23 or pre-load nut 27.

As, the eccentric coupling 11 pushes the slider 30 into the valve sleeve 14, this force is transmitted via the washer 28, the second spring 26, flange 24 and valve element retaining member 20 in order to close the valve element 6 against the action of the first spring 25 and the fluid pressure. When the eccentric coupling is turned to withdraw the slider 30 from the sleeve 14, this simply releases the closing force on the valve stem components so that the biasing force provided by the first spring 25, together with the fluid pressure cause the valve to open.

The presence of the second spring 26 allows the mechanism to take up any slack caused by dimensional tolerances within the valve component or by wear of components such as the valve element 6. For example, if the valve element 6 wears over time, the biasing force provided by the second spring 26 will force the valve element retaining member 20 further to the left as shown in Fig. 1 by a force applied by the annular flange 24 and the pre-load shaft 23.

As a result of this, the lever 10 can always return to the exact same opening and closing positions even once the valve components wear, and the second spring 26 guarantees the valve element will still close with the desired force.

Further, even if there are dimensional tolerances from one cylinder to the next, the presence of the second spring 26 means that all of these cylinders can have the same opening and closing position such that, if the user is looking across a large number of cylinders, these will all look uniform as their levers will be in the same position. If all of the levers were to close in different positions, this would create uncertainty in the mind of the user as to whether the cylinders were fully closed, and would also look untidy to create an impression that the valves were not well engineered.

## Claims

1. A pressurised fluid cylinder (2) having a shut-off valve, the shut-off valve comprising a valve element (6) which is movable in a linear direction towards and away from a valve seat (7) to respectively selectively close and open the shut-off valve, a lever (10) which is coupled to the valve element via an eccentric coupling (13) so that rotation of the lever causes linear motion of the valve element, **characterised by** a resilient member (26) acting between the valve element and the eccentric coupling so as to urge these apart.

2. A cylinder according to claim 1, wherein the cylinder (2) further comprises a resilient member adjustment nut (27) which allows adjustment of the biasing force provided by the resilient member (26).

3. A cylinder according to claim 1 or claim 2, wherein the eccentric coupling (13) is coupled to the valve element (6) via a valve stem (12) and the resilient member (26) is accommodated within the valve stem (12).

4. A cylinder according to any one of the preceding claims, wherein the eccentric coupling (13) is a cam mechanism.

5. A cylinder according to any one of the preceding claims, wherein the eccentric coupling (13) is a crank mechanism.

## Patentansprüche

1. Druckfluidflasche (2) mit einem Absperrventil, wobei das Absperrventil ein Ventilelement (6), das in einer linearen Richtung zu einem Ventilsitz (7) hin und von diesem weg beweglich ist, um das Absperrventil gezielt zu schließen bzw. zu öffnen, und einen Hebel (10) umfasst, der über eine exzentrische Kupplung (13) an das Ventilelement gekoppelt ist, so dass eine Drehung des Hebels eine lineare Bewegung des Ventilelements veranlasst, **gekennzeichnet durch** ein federndes Glied (26), das zwischen dem Ventilelement und der exzentrischen Kupplung wirkt, um diese auseinanderzudrängen.

2. Flasche nach Anspruch 1, wobei die Flasche (2) ferner eine Verstellmutter (27) für das federnde Glied umfasst, wobei diese ein Verstellen der von dem federnden Glied (26) bereitgestellten Vorspannkraft gestattet.

3. Flasche nach Anspruch 1 oder Anspruch 2, wobei die exzentrische Kupplung (13) über einen Ventilschaft (12) an das Ventilelement (6) gekoppelt ist und das federnde Glied (26) in dem Ventilschaft (12) untergebracht ist.

4. Flasche nach einem der vorhergehenden Ansprüche, wobei die exzentrische Kupplung (13) ein Nockenmechanismus ist.

5. Flasche nach einem der vorhergehenden Ansprüche, wobei die exzentrische Kupplung (13) ein Kurbelmechanismus ist.

## Revendications

1. Cylindre de fluide sous pression (2) présentant une soupape d'arrêt, la soupape d'arrêt comprenant un élément de soupape (6) qui peut être déplacé dans une direction linéaire vers et depuis un siège de soupape (7) pour respectivement fermer et ouvrir de manière sélective la soupape d'arrêt, un levier (10) qui est accouplé à l'élément de soupape par le biais d'un accouplement excentrique (13) de telle sorte que la rotation du levier provoque le mouvement linéaire de l'élément de soupape, **caractérisé par** un organe élastique (26) agissant entre l'élément de soupape et l'accouplement excentrique de manière à écarter ceux-ci l'un de l'autre.

2. Cylindre selon la revendication 1, le cylindre (2) comprenant en outre un écrou d'ajustement d'organe élastique (27) qui permet l'ajustement de la force de sollicitation fournie par l'organe élastique (26) .

3. Cylindre selon la revendication 1 ou la revendication 2, dans lequel l'accouplement excentrique (13) est accouplé à l'élément de soupape (6) par le biais d'une tige de soupape (12) et l'organe élastique (26) est reçu à l'intérieur de la tige de soupape (12).

4. Cylindre selon l'une quelconque des revendications précédentes, dans lequel l'accouplement excentrique (13) est un mécanisme à came.

5. Cylindre selon l'une quelconque des revendications précédentes, dans lequel l'accouplement excentrique (13) est un mécanisme à manivelle.
